# FASCICULE DE BREVET EUROPEEN

(11) **EP 1 204 702 B1**
(45) Date de publication et mention de la délivrance du brevet: **25.04.2012**
(21) Numéro de dépôt: 01936381.1
(22) Date de dépôt: 21.05.2001
(51) Int. Cl.: C08L 9/06, C08L 19/00, B60C 1/00

(54) **COMPOSITION DE CAOUTCHOUC UTILISABLE COMME BANDE DE ROULEMENT DE PNEUMATIQUE**
KAUTSCHUKZUSAMMENSETZUNG FüR REIFEN MIT LAUFFLÄCHE
RUBBER COMPOSITION FOR USE AS TYRE RUNNING TREAD

(30) Priorité: 26.05.2000 FR 0006875
(43) Date de publication de la demande: 15.05.2002
(73) Titulaire: Société de Technologie Michelin, 63000 Clermont-Ferrand Cedex 09 (FR); Michelin Recherche et Technique S.A., 1763 Granges-Paccot (CH)
(72) Inventeur: ROBERT, Pierre, F-63170 Perignat-Les-Sarlieve (FR); FAVROT, Jean-Michel, F-63800 Cournon-d'Auvergne (FR); FRADIN-COHAS, Corinne, F-63000 Clermont-Ferrand (FR)
(74) Mandataire: Le Cam, Véronique Marie Christine
(86) Numéro de dépôt international: PCT/EP2001/005801
(87) Numéro de publication internationale: WO 2001/092402

(56) Documents cités:
- EP-A- 0 794 224
- DE-A- 19 941 166
- US-A- 4 780 507
- US-A- 5 684 089

## Description

La présente invention concerne une composition de caoutchouc réticulable ou réticulée présentant des propriétés hystérétiques améliorés à l'état vulcanisé qui est utilisable pour constituer une bande de roulement de pneumatique, un procédé de préparation d'une telle composition réticulable, une telle bande de roulement et un pneumatique présentant une résistance au roulement réduite.

Depuis que les économies de carburant et la nécessité de préserver l'environnement sont devenues une priorité, il est souhaitable de produire des mélanges possédant de bonnes propriétés mécaniques et une hystérèse aussi faible que possible afin de pouvoir les mettre en oeuvre sous forme de compositions de caoutchouc utilisables pour la fabrication de divers produits semi-finis entrant dans la composition d'enveloppes de pneumatique, tels que par exemple des sous-couches, des flancs, des bandes de roulement, et afin d'obtenir des pneumatiques possédant une résistance au roulement réduite.

Pour atteindre un tel objectif, de nombreuses solutions ont été proposées consistant notamment à modifier la structure des polymères et des copolymères diéniques en fin de polymérisation au moyen d'agents de fonctionnalisation, de couplage ou d'étoilage. La très grande majorité de ces solutions s'est concentrée sur l'utilisation de polymères fonctionnalisés qui sont actifs vis-à-vis du noir de carbone, dans le but d'obtenir une bonne interaction entre le polymère ainsi modifié et le noir de carbone.

A titre d'illustration de cet art antérieur relatif à des charges renforçantes constituées de noir de carbone, on peut par exemple citer le document de brevet américain US-A- 3 135 716, qui décrit la réaction de polymères diéniques vivants en fin de chaîne avec un agent de couplage organique polyfonctionnel pour obtenir des polymères aux propriétés améliorées. On peut également citer le document de brevet américain US-A-3 244 664, qui divulgue l'utilisation de tétra alcoxysilanes, à titre d'agent de couplage ou d'étoilage de polymères diéniques.

L'utilisation de silice à titre de charge renforçante dans des compositions de caoutchouc vulcanisables, notamment destinées à entrer dans la constitution de bandes de roulement de pneumatique, est ancien. Cependant, cette utilisation est restée très limitée, en raison du niveau insatisfaisant de certaines propriétés physiques de telles compositions, notamment la résistance à l'abrasion.

C'est la raison pour laquelle il a été proposé d'utiliser, pour pallier ces inconvénients, des polymères diéniques fonctionnalisés à la place des polymères non fonctionnalisés qui étaient antérieurement utilisés, et en particulier des polymères fonctionnalisés par des dérivés alcoxysilanes, tels que des tétra éthoxysilanes. On peut par exemple citer le document de brevet américain US-A-5 066 721, qui décrit une composition de caoutchouc comprenant un polymère diénique fonctionnalisé par un alcoxysilane ayant au moins un reste alcoxyle non hydrolysable, ce qui permet l'élimination du solvant de polymérisation par un stripping à la vapeur d'eau.

Un inconvénient de ces réactions de fonctionnalisation réside dans les réactions de couplage qui les accompagnent, ce qui impose généralement d'utiliser un excès d'alcoxysilane et/ou un mélangeage intense, pour minimiser ces réactions de couplage.

Un autre inconvénient de ces réactions réside dans la mise en oeuvre ultérieure de l'opération de stripping à la vapeur d'eau, qui est nécessaire pour éliminer le solvant de polymérisation.

En effet, d'une manière générale; l'expérience montre que les polymères fonctionnalisés obtenus subissent des évolutions de macrostructure lors de cette opération de stripping, ce qui conduit à une sévère dégradation de leurs propriétés, à moins de se limiter à utiliser à titre d'agent de fonctionnalisation un alcoxysilane appartenant à une famille restreinte, telle que celle qui est décrite dans le document précité US-A-5 066 721.

Par conséquent, il ressort de ce qui précède que l'utilisation de polymères diéniques comprenant une fonction alcoxysilane pour obtenir des compositions de caoutchouc comprenant de la silice à titre de charge renforçante n'est pas satisfaisante, en dépit des propriétés physiques améliorées de ces compositions.

C'est la raison pour laquelle des recherches ont été menées sur d'autres réactions de fonctionnalisation, toujours en vue de l'obtention de telles compositions de caoutchouc.

A titre d'exemple, on peut citer le document de brevet français FR-A-2 740 778 au nom de la demanderesse, qui divulgue l'incorporation à des compositions de caoutchouc comprenant à titre de charge renforçante de la silice à titre majoritaire (par exemple comprenant un coupage de silice et de noir de carbone), de polymères diéniques portant en extrémité de chaîne une fonction silanol ou un bloc polysiloxane ayant une extrémité silanol. On utilise par exemple un agent de fonctionnalisation constitué d'un polysiloxane cyclique, tel que l'hexaméthylcyclotrisiloxane. Les polymères fonctionnalisés obtenus peuvent être séparés du milieu réactionnel conduisant à leur formation par extraction à la vapeur d'eau du solvant, sans que leur macrostructure et, par conséquent, leurs propriétés physiques n'évoluent.

On peut également citer le document de brevet européen EP-A-877 047, qui divulgue l'incorporation de tels polymères à fonction silanol à des compositions de caoutchouc comprenant à titre de charge renforçante du noir de carbone ayant de la silice fixée à sa surface.

On a pu établir que ces polymères confèrent des propriétés de caoutchouterie, notamment hystérétiques et de renforcement à l'état vulcanisé, qui sont améliorées par rapport à celles de compositions témoin à base de polymères diéniques non fonctionnalisés, et qui sont au moins analogues à celles de compositions à base de polymères diéniques comprenant une fonction alcoxysilane.

On peut également citer le document de brevet européen EP-A-692 493, qui établit que des polymères diéniques portant en extrémité de chaîne des groupements alcoxysilanes ainsi qu'un groupement époxy conduisent à des propriétés de renforcement améliorées et à des pertes hystérétiques réduites aux petites et grandes déformations.

Un inconvénient de ces polymères, qui comportent un groupe fonctionnel actif pour un couplage à de la silice ou à du noir de carbone modifié en surface par de la silice, est que l'amélioration des propriétés d'hystérèse et de renforcement qu'ils confèrent aux compositions de caoutchouc les incorporant s'accompagne généralement d'une aptitude à la mise en oeuvre des mélanges non vulcanisés qui est pénalisée par rapport à celle de polymères « témoin » non fonctionnalisés.

*Pour remédier à cet inconvénient, le document de brevet européen EP-A-794.224 divulgue une composition de caoutchouc diénique obtenue par mélangeage en solution d'un copolymère butadiène-styrène modifié par un groupe fonctionnel représenté par la formule -C(=M)- dans laquelle M peut être un atome d'oxygène et comprenant en outre, à titre préférentiel, au moins un groupe amino substitué, ayant une masse moléculaire moyenne en poids comprise entre 150. 000 et 500.000 avec un caoutchouc diénique couplé ou branché ayant une masse moléculaire en poids égale ou supérieure à 800.000 et un agent de renforcement qui peut être du noir de carbone, de la silice ou un mélange des deux.*

*Les propriétés de résistance à l'abrasion, d'hystérèse, etc., sont réglées en utilisant un rapport large du caoutchouc diénique de haut poids moléculaire sur caoutchouc diénique modifié et en utilisant une faible quantité d'un autre caoutchouc diénique tel que du caoutchouc naturel.*

*On peut également citer la demande de brevet DE-A-19941166 qui décrit une composition de caoutchouc utilisable comme bande de roulement de pneumatiques comprenant un caoutchouc diénique et un polybutène ou polyisobutylène fonctionnalisé comportant, dans la chaîne principale, à ses extrémités et*/*ou sur ses chaînes latérales, au moins une structure semi-ester ou d'acide amic ou d'un sel omnium ou imide qui permet d'augmenter la tangente δ à 0°C et de diminuer la résistance à l'abrasion avec un agent de renforcement. Cependant, un inconvénient majeur de ces polybutènes fonctionnalisés réside dans leur difficile compatibilité avec les caoutchoucs diéniques conventionnellement utilisés pour la fabrication de pneumatiques notamment de bandes de roulement.*

Parmi les autres réactions de fonctionnalisation étudiées, on peut également citer la fonctionnalisation des polymères diéniques par des fonctions acide carboxylique (COOH) en extrémité de chaîne, qui est usuellement réalisée à partir d'un initiateur contenant un métal alcalin.

Cette réaction de fonctionnalisation peut par exemple consister, comme décrit dans l'article « Macromolécules, vol 22, p. 85 (1989) », à faire réagir la solution de polymère vivant avec du gaz carbonique (CO₂) à l'état solide, à une température de l'ordre de -78° C.

Ladite réaction peut également consister, comme décrit dans les documents de brevet US-A-4 950 721 et WO-A-91/04993, à faire réagir d'abord la ou les extrémités de chaîne carbone-métal avec un agent de désactivation, tel que le 1,1-diphényléthylène ou encore l'α-méthylstyrène, puis à réaliser la carbonatation en présence d'un composé polaire (par exemple le tétrahydrofurane) qui est présent dans le milieu réactionnel selon une fraction massique allant de 2 à 25 %, à une température ne dépassant pas 20° C (usuellement égale à -10° C).

Le document de brevet anglais GB-A-921 803 divulgue la mise en oeuvre de la réaction de carbonatation du polymère vivant dans une zone de turbulence, par exemple dans un tube en T, zone dans laquelle on introduit une solution de polymère vivant et du gaz carbonique.

On connaît également, par les documents de brevet est-allemands DD-A-139 661 et DD-A-236 537, des procédés de carbonatation de polymères vivants consistant essentiellement à atomiser un polymère vivant, par exemple lithié, dans un courant turbulent de gaz carbonique caractérisé par une pression et un débit d'écoulement très élevés.

Les documents de brevet japonais JP-A-07/138 411 et JP-A-07/138 412 divulguent tous deux des bandes de roulement de pneumatique obtenues par l'association à du noir de carbone d'une matrice élastomère comprenant en quantité minoritaire un polymère diénique comprenant un groupe COOH en extrémité de chaîne et ayant été fonctionnalisé par réaction avec le CO₂.

On connaît, par le document de brevet américain US-A-3 900 532, l'association à de la silice d'une matrice élastomère comprenant en quantité minoritaire un polymère diénique comportant un groupe COOH en extrémité de chaîne, cela dans le but d'obtenir une composition pâteuse pouvant être, d'une part, mise en oeuvre par moulage par injection et, d'autre part, vulcanisée sans addition de soufre ou d'accélérateur de vulcanisation. A cet effet, cette matrice élastomère comprend également, en quantité majoritaire, un autre polymère diénique qui n'est pas fonctionnalisé.

Selon l'exemple de réalisation qui figure dans ce document, le polymère diénique fonctionnalisé est un polybutadiène, alors que l'autre polymère diénique non fonctionnalisé est un polychloroprène. De plus, le polybutadiène fonctionnalisé est présent dans la composition de caoutchouc selon une quantité de 50 parties en poids pour 100 parties de polychloroprène.

On notera que ce polybutadiène est caractérisé par une masse moléculaire de 6 000 g/mol, cette masse très réduite étant liée au taux pondéral élevé en fonctions COOH, lequel est proche de 2%.

Le document de brevet japonais JP-A-07/292 159 divulgue également une composition de caoutchouc réticulable qui comprend de la silice et une matrice élastomère comprenant en quantité très minoritaire un polymère diénique comportant en extrémité de chaîne un groupe COOH. Cette matrice élastomère comprend majoritairement un autre polymère diénique qui n'est pas fonctionnalisé, lequel est constitué de caoutchouc naturel ou d'un copolymère de styrène et de butadiène dans les exemples de réalisation qui figurent dans ce document. Dans ces exemples, le polymère fonctionnalisé est présent dans la composition de caoutchouc selon une quantité de 5 parties en poids pour 95 parties de polymère non fonctionnalisé.

A l'instar du précédent document, on notera que les polymères fonctionnalisés qui ont été testés sont caractérisés par des masses moléculaires au plus égales à 38 000 g/mol, ces masses réduites étant liées aux taux pondéraux élevés en fonctions COOH, lesquels sont proches de 1 %.

La demanderesse a découvert d'une manière inattendue qu'une composition de caoutchouc réticulable ou réticulée obtenue par l'association à une charge inorganique renforçante d'une matrice élastomère comprenant au moins un élastomère diénique qui comporte une fonction acide carboxylique à l'une ou à chacune de ses deux extrémités de chaîne, ledit élastomère diénique présentant une masse moléculaire en nombre Mn qui est supérieure à 80 000 g/mol et étant présent en quantité majoritaire dans ladite matrice élastomère,
présente des pertes hystérétiques réduites aux petites et aux grandes déformations, analogues à celles présentées par des compositions connues à base de polymères comportant des groupes fonctionnels actifs pour un couplage à la silice (tels que les groupes alcoxysilane ou silanol précités), tout en possédant des propriétés de mise en oeuvre à l'état non vulcanisé qui sont améliorées par rapport à celles de ces compositions connues chargées à la silice et qui sont comparables à celles de compositions chargées à la silice à base de polymères non fonctionnalisés.

Ces caractéristiques avantageuses rendent la composition selon l'invention utilisable pour constituer une bande de roulement de pneumatique.

Par élastomère diénique, on entend de manière connue un élastomère (homopolymère ou copolymère) qui est issu au moins en partie de monomères diènes (monomères porteurs de deux doubles liaisons carbone-carbone, conjuguées ou non).

De préférence, ledit élastomère diénique à fonction(s) acide carboxylique de la composition selon l'invention est un élastomère diénique "essentiellement insaturé", c'est-à-dire un élastomère diénique qui est issu au moins en partie de monomères diènes conjugués ayant un taux de motifs ou unités d'origine diénique (diènes conjugués) qui est supérieur à 15 % (% en moles).

C'est ainsi, par exemple, que des élastomères diéniques tels que les caoutchoucs butyle ou les copolymères de diènes et d'alpha-oléfines de type EPDM n'entrent pas dans la définition précédente, car ils peuvent être qualifiés d'élastomères diéniques "essentiellement saturés" (taux de motifs d'origine diénique faible ou très faible, toujours inférieur à 15 %).

A titre encore plus préférentiel, ledit élastomère diénique à fonction(s) acide carboxylique de la composition selon l'invention est un élastomère diénique "fortement insaturé", c'est-à-dire un élastomère diénique ayant un taux de motifs d'origine diénique (diènes conjugués) qui est supérieur à 50 %.

A titre d'élastomère diénique susceptible d'être mis en oeuvre dans les compositions conformes à l'invention, on peut utiliser:
- un homopolymère obtenu par polymérisation d'un monomère diène conjugué ayant de 4 à 12 atomes de carbone, ou
- un copolymère obtenu par copolymérisation d'un ou plusieurs diènes conjugués entre eux ou avec un ou plusieurs composés vinyle aromatique ayant de 8 à 20 atomes de carbone.

A titre de diènes conjugués conviennent notamment le butadiène-1,3, le 2-méthyl-1,3-butadiène, les 2,3-di(alkyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinyle-aromatiques conviennent par exemple le styrène, l'ortho-, le méta-, para-méthylstyrène, le mélange commercial "vinyle-toluène", le para-tertiobutylstyrène, les méthoxystyrènes, les chlorostyrènes, le, vinylmésitylène, le divinylbenzène, le vinylnaphtalène.

Les copolymères peuvent contenir entre 99% et 20% en poids d'unités diéniques et entre 1% et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution. Ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes de synthèse, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (Tg) de -40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

De manière particulièrement préférentielle, l'élastomère diénique de la composition conforme à l'invention est choisi dans le groupe des élastomères diéniques fortement insaturés constitué par les polybutadiènes (BR), les polyisoprènes de synthèse (IR), les copolymères de butadiène-styrène (SBR), les copolymères de butadiène-isoprène (BIR), les copolymères d'isoprène-styrène (SIR), les copolymères de butadiène-styrène-isoprène (SBIR) ou un mélange de deux ou plus de ces composés.

De manière encore plus préférentielle, l'élastomère diénique est
- un copolymère de butadiène-styrène préparé en solution ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C, ou bien
- un copolymère de butadiène-styrène-isoprène.

Sont considérés dans l'invention les élastomères diéniques précités qui sont obtenus à partir de tout initiateur anionique, qu'il soit mono-fonctionnel ou poly-fonctionnel, ou non anionique. Toutefois, on utilise à titre préférentiel un initiateur anionique contenant un métal alcalin tel que le lithium, ou un métal alcalino-terreux tel que le baryum.

Comme initiateurs organolithiens conviennent notamment ceux comportant une ou plusieurs liaisons carbone-lithium. On peut par exemple citer les organolithiens aliphatiques, tels que l'éthyllithium, le n-butyllithium (nBuLi), l'isobutyllithium, les polyméthylènes dilithium tels que le 1-4 dilithiobutane.

On peut également utiliser avantageusement des amidures de lithium, car ils conduisent à un polymère pouvant présenter à l'une des extrémités de chaîne une fonction amine tertiaire et à l'autre extrémité une fonction COOH. Ces amidures de lithium sont obtenus à partir d'une amine secondaire acyclique ou cyclique, telle que la pyrrolidine ou l'hexaméthylèneimine.

Sont également considérés dans l'invention les élastomères diéniques qui sont initiés par des composés de métaux de transition, tels que des composés du titane par exemple, ou par des terres rares, telles que le néodyme.

La polymérisation est, comme connu de l'homme de l'art, de préférence effectuée en présence d'un solvant inerte qui peut être par exemple un hydrocarbure aliphatique ou alicyclique comme le pentane, l'hexane, l'iso-octane, le cyclohexane, le methylcyclohexane, le cyclopentane, ou un hydrocarbure aromatique comme le benzène, le toluène ou le xylène. Cette polymérisation peut être effectuée en continu ou discontinu. On l'effectue généralement à une température comprise entre 20° C et 120° C, de préférence comprise entre 30° C et 100° C.

La fonctionnalisation des élastomères diéniques ainsi obtenus par des fonctions COOH en extrémité de chaîne peut par exemple être réalisée en mettant en oeuvre l'un des procédés susmentionnés en page 4, lignes 8-23 de la présente description (i.e. en se référant à l'un au choix des documents précités « Macromolécules, vol 22, p. 85 (1989) », US-A-4 950 721, WO-A-91/04993, GB-A-921 803, DD-A-139 661 et DD-A-236 537.

Avantageusement, cette fonctionnalisation est réalisée en mettant en oeuvre le procédé de carbonatation décrit dans le document de brevet européen EP-A-1 072 613 au nom de la demanderesse, dont le contenu est incorporé à la présente description par référence.

Bien entendu, les compositions de l'invention peuvent contenir un seul élastomère diénique tel que celui précité ou un mélange de plusieurs de ces élastomères diéniques.

Le ou les élastomères diéniques selon l'invention à fonction(s) COOH peuvent être utilisés seuls dans la composition conforme à l'invention, ou être utilisés en coupage avec tout autre élastomère conventionnellement utilisé dans les pneumatiques, tel que du caoutchouc naturel ou un coupage à base de caoutchouc naturel et un élastomère synthétique, ou encore un autre élastomère diénique éventuellement couplé et/ou étoilé ou encore partiellement ou entièrement fonctionnalisé avec une fonction autre qu'une fonction acide carboxylique.

On notera que l'amélioration des propriétés de la composition de caoutchouc selon l'invention sera d'autant plus élevée, que la proportion dudit ou desdits élastomères conventionnels dans la composition selon l'invention sera plus réduite. Avantageusement, cet ou ces élastomères conventionnels pourront le cas échéant être présents dans la composition selon l'invention selon une quantité allant de 1 à 70 parties en poids pour 100 parties en poids d'élastomère(s) diénique(s) selon l'invention à fonction(s) acide carboxylique.

Dans la présente demande, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Préférentiellement, la charge inorganique renforçante est présente dans la composition de l'invention selon une quantité égale ou supérieure à 40 pce (pce: parties en poids pour cent parties d'élastomère(s) diénique(s)).

Egalement à titre préférentiel, cette charge inorganique renforçante est présente à titre majoritaire dans la charge renforçante de la composition de l'invention, de telle manière que sa fraction massique dans ladite charge renforçante soit supérieure à 50 %.

Avantageusement, ladite charge inorganique renforçante est, en totalité ou tout du moins majoritairement, de la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, même si les silices précipitées hautement dispersibles sont préférées.

Dans le présent exposé, la surface spécifique BET est déterminée de manière connue, selon la méthode de Brunauer-Emmet-Teller décrite dans "The Journal of the American Chemical Society" Vol. 60, page 309, février 1938 et correspondant à la norme AFNOR-NFT-45007 (novembre 1987); la surface spécifique CTAB est la surface externe déterminée selon la même norme AFNOR-NFT-45007 de novembre 1987.

Par silice hautement dispersible, on entend toute silice ayant une aptitude très importante à la désagglomération et à la dispersion dans une matrice élastomère, observable de manière connue par microscopie électronique ou optique, sur coupes fines. Comme exemples non limitatifs de telles silices hautement dispersibles préférentielles, on peut citer la silice Perkasil KS 430 de la société Akzo, la silice BV 3380 de la société Degussa, les silices Zeosil 1165 MP et 1115 MP de la société Rhodia, la silice Hi-Sil 2000 de la société PPG, les silices Zeopol 8741 ou 8745 de la Société Huber, des silices précipitées traitées telles que par exemple les silices "dopées" à l'aluminium décrites dans la demande EP-A-0 735 088.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

On notera que la charge renforçante d'une composition de caoutchouc selon l'invention peut contenir en coupage (mélange), en plus de la ou des charges inorganiques renforçantes précitées, du noir de carbone à titre minoritaire (c'est-à-dire selon une fraction massique inférieure à 50 %). Comme noirs de carbone conviennent tous les noirs de carbone, notamment les noirs du type HAF, ISAF, SAF, conventionnellement utilisés dans les pneumatiques et particulièrement dans les bandes de roulement des pneumatiques. A titre d'exemples non limitatifs de tels noirs, on peut citer les noirs N115, N134, N234, N339, N347, N375.

Par exemple, les coupages noir/ silice ou les noirs partiellement ou intégralement recouverts de silice conviennent pour constituer la charge renforçante. Conviennent également des charges inorganiques renforçantes comprenant les noirs de carbone modifiés par de la silice tels que, à titre non limitatif, les charges qui sont commercialisées par la société CABOT sous la dénomination « CRX 2000 », et qui sont décrites dans le document de brevet international WO-A-96/37547.

A titre de charge inorganique renforçante, on peut également utiliser, à titre non limitatif,
- des alumines (de formule Al₂O₃), telles que les alumines à dispersibilité élevée qui sont décrites dans le document de brevet européen EP-A-810 258, ou encore
- des hydroxydes d'aluminium, tels que ceux décrits dans le document de brevet international WO-A-99/28376.

Dans le cas où la charge renforçante ne contient qu'une charge inorganique renforçante et du noir de carbone, la fraction massique de ce noir de carbone dans ladite charge renforçante est préférentiellement choisie inférieure ou égale à 30 %.

Cependant, l'expérience montre que les propriétés précitées de la composition selon l'invention sont d'autant plus améliorées, que la charge renforçante qu'elle comprend contient une fraction massique plus élevée en charge inorganique renforçante, et que lesdites propriétés sont optimales lorsque ladite composition contient uniquement une charge inorganique renforçante, par exemple de la silice, à titre de charge renforçante. Ce dernier cas constitue donc un exemple préférentiel de composition de caoutchouc selon l'invention.

La composition de caoutchouc selon l'invention comprend en outre de manière classique, un agent de liaison charge inorganique renforçante / matrice élastomère (encore appelé agent de couplage), qui a pour fonction d'assurer une liaison (ou couplage) suffisante, de nature chimique et/ou physique, entre ladite charge inorganique et la matrice, tout en facilitant la dispersion de cette charge inorganique au sein de ladite matrice.

Par agent de couplage, on entend plus précisément un agent apte à établir une connexion suffisante, de nature chimique et/ou physique, entre la charge considérée et l'élastomère, tout en facilitant la dispersion de cette charge au sein de la matrice élastomère. Un tel agent de couplage, au moins bifonctionnel, a par exemple comme formule générale simplifiée " Y=T-X ", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère, par exemple par l'intermédiaire d'un atome de soufre;
- T représente un groupe permettant de relier Y et X.

Les agents de couplage ne doivent en particulier pas être confondus avec de simples agents de recouvrement de la charge considérée qui, de manière connue, peuvent comporter la fonction Y active vis-à-vis de la charge mais sont dépourvus de la fonction X active vis-à-vis de l'élastomère.

De tels agents de couplage, d'efficacité variable, ont été décrits dans un très grand nombre de documents et sont bien connus de l'homme du métier. On peut utiliser en fait tout agent de couplage connu pour, où susceptible d'assurer efficacement, dans les compositions de caoutchouc diénique utilisables pour la fabrication de pneumatiques, la liaison ou couplage entre une charge inorganique renforçante telle que de la silice et un élastomère diénique, comme par exemple des organosilanes, notamment des alkoxysilanes polysulfurés ou des mercaptosilanes, ou encore des polyorganosiloxanes porteurs des fonctions X et Y précitées.

Des agents de couplage silice/élastomère, notamment, ont été décrits dans un grand nombre de documents, les plus connus étant des alkoxysilanes bifonctionnels tels que des alkoxysilanes polysulfurés.

On utilise en particulier des alkoxysilanes polysulfures, dits "symétriques" ou "asymétriques" selon leur structure particulière, tels que décrits par exemple dans les brevets US-A-3 842 111, US-A-3 873 489, US-A-3 978 103, US-A-3 997 581, US-A-4 002 594, US-A-4 072 701, US-A-4 129 585, ou dans les brevets plus récents US-A-5 580 919, US-A-5 583 245, US-A-5 650 457, US-A-5 663 358, US-A-5 663 395, US-A-5 663 396, US-A-5 674 932, US-A-5 675 014, US-A-5 684 171, US-A-5 684 172, US-A-5 696 197, US-A-5 708 053, US-A-5 892 085, EP-A-1 043 357 qui énoncent en détail de tels composés connus.

Conviennent en particulier pour la mise en oeuvre de l'invention, sans que la définition ci-après soit limitative, des alkoxysilanes polysulfurés symétriques répondant à la formule générale (I) suivante:
(I) Z-A-Sn-A-Z , dans laquelle:
   - n est un entier de 2 à 8 (de préférence de 2 à 5);
   - A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄ en particulier le propylène);
   - Z répond à l'une des formules ci-après: 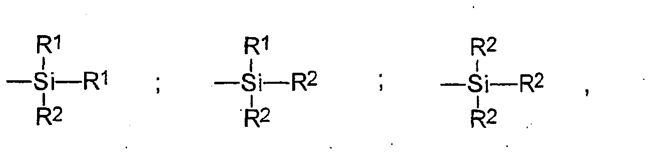 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle où phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence des groupes alkoxyle en C₁-C₈ ou cycloalkoxyle en C₅-C₈, plus préférentiellement des groupes alkoxyle en C₁-C₄, en particulier le méthoxyle et/ou l'éthoxyle).

Dans le cas d'un mélange d'alkoxysilanes polysulfurés répondant à la formule (I) ci-dessus, notamment des mélanges usuels disponibles commercialement, on comprendra que la valeur moyenne des "n" est un nombre fractionnaire, de préférence compris dans un domaine de 2 à 5.

Comme alkoxysilanes polysulfurés, on citera plus particulièrement les polysulfures (notamment les disulfures, trisulfures ou tétrasulfures) de bis-(alkoxyl(C₁-C₄)-alkyl(C₁-C₄)silylalkyl(C₁-C₄)), comme par exemple les polysulfures de bis(3-triméthoxysilylpropyl) ou de bis(3-triéthoxysilylpropyl). Parmi ces composés, on utilise notamment le tétrasulfure de bis(3-triéthoxysilylpropyl), en abrégé TESPT, de formule [(C₂H₅O)₃Si(CH₂)₃S₂]₂ ou le disulfure de bis(triéthoxysilylpropyle), en abrégé TESPD, de formule [(C₂H₅O)₃Si(CH₂)₃S]₂. Le TESPD est commercialisé par exemple par la société Degussa sous les dénominations Si266 ou Si75 (dans le second cas, sous forme d'un mélange de disulfure (à 75% en poids) et de polysulfures), ou encore par la société Witco sous la dénomination Silquest A1589. Le TESPT est commercialisé par exemple par la société Degussa sous la dénomination Si69 (ou X50S lorsqu'il est supporté à 50% en poids sur du noir de carbone), ou encore par la société Osi Specialties sous la dénomination Silquest A1289 (dans les deux cas, mélange commercial de polysulfures avec une valeur moyenne pour n qui est proche de 4).

Les compositions conformes à l'invention comprennent également, outre le ou les élastomères diéniques à fonction(s) acide carboxylique et ladite charge inorganique renforçante, des plastifiants, des pigments, des anti-oxydants, des cires anti-ozonantes, un système de vulcanisation à base soit de soufre et/ou de peroxyde et/ou de bismaléimides, des accélérateurs de vulcanisation, des huiles d'extension, un ou plusieurs agents de recouvrement de la charge inorganique renforçante, tels que des alcoxysilanes, des polyols, ou des amines.

L'invention a également pour objet un procédé de préparation d'une composition de caoutchouc réticulable conforme à l'invention.

De manière connue, un tel procédé consiste essentiellement en un premier temps de travail thermo-mécanique des constituants de ladite composition à l'exception du système de réticulation et à une température maximale comprise entre 130° C et 200° C, suivi d'un second temps de travail mécanique mis en oeuvre à une température inférieure à celle dudit premier temps et au cours de laquelle est incorporé ledit système de réticulation, ledit premier temps comprenant:
- une première étape dans laquelle sont mélangés entre eux lesdits constituants dudit premier temps, à l'exception de l'agent anti-oxydant et
- une seconde étape dans laquelle l'agent anti-oxydant est incorporé et mélangé aux constituants de ladite première étape.

De plus, du monoxyde de zinc est usuellement ajouté lors de ladite seconde étape pour activer la réticulation ultérieure.

La demanderesse a découvert d'une manière inattendue que l'incorporation de la totalité du monoxyde de zinc lors de la première étape de travail thermo-mécanique, cela contrairement à l'usage où on l'incorpore lors de la seconde étape de travail thermo-mécanique, permet de minimiser encore les pertes hystérétiques aux faibles déformations de la composition selon l'invention à l'état réticulé répondant à la définition précitée, tout en conférant à cette composition selon l'invention des propriétés de mise en oeuvre à l'état non réticulé qui sont toujours améliorées par rapport à celles de compositions à base d'élastomères fonctionnels connus et qui sont comparables à celles des compositions selon l'invention obtenues par incorporation du monoxyde de zinc lors de la seconde étape de travail thermo-mécanique.

L'invention a également pour objet une bande de roulement de pneumatique qui est telle qu'elle comprend une composition de caoutchouc telle que celle susmentionnée, ou bien qui est telle qu'elle est constituée de cette composition.

En raison de l'hystérèse réduite qui caractérise une composition de caoutchouc selon l'invention à l'état vulcanisé, on notera qu'un pneumatique dont la bande de roulement comprend ladite composition présente une résistance au roulement avantageusement réduite.

Un pneumatique selon l'invention est tel qu'il comporte cette bande de roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

Pour les polymères, les viscosités indiqués sont des viscosités inhérentes mesurées à une - concentration de 1 g/l dans le toluène à 25° C.

Les techniques expérimentales suivantes ont notamment été utilisées pour la caractérisation des polymères obtenus.
a) On a utilisé la technique SEC (chromatographie d'exclusion par la taille) pour déterminer les distributions de masses moléculaires relatives à des échantillons de ces polymères. A partir de produits étalons dont les caractéristiques sont décrites dans l'exemple 1 du document de brevet européen EP-A-692 493, cette technique a permis d'évaluer pour un échantillon une masse moléculaire en nombre Mn qui a une valeur relative, à la différence de celle déterminée par osmométrie, ainsi qu'une masse moléculaire moyenne en poids (Mw). On en a déduit l'indice de polydispersité (Ip=Mw/Mn) de cet échantillon.

Selon cette technique, on sépare physiquement les macromolécules suivant leurs tailles respectives à l'état gonflé, dans des colonnes remplies d'une phase stationnaire poreuse. Avant de mettre en oeuvre cette séparation, on solubilise l'échantillon de polymère à une concentration d'environ 1 g/l dans du tétrahydrofurane.

On utilise pour la séparation précitée un chromatographe commercialisé sous la dénomination «WATERS» et sous le modèle «150C». Le solvant d'élution est le tétrahydrofurane, le débit est de 1 ml/min, la température du système est de 35° C et la durée d'analyse est de 30 min. On utilise un jeu de deux colonnes « WATERS » dont le type est « STYRAGEL HT6E ».

Le volume injecté de la solution d'échantillon de polymère est de 100 µl. Le détecteur est un réfractomètre différentiel « WATERS » dont le modèle est « R401 ». On utilise également un logiciel d'exploitation des données chromatographiques, dont la dénomination commerciale est « WATERS MILLENIUM ».
b) Dans le but de calculer le taux de fonctions COOH (en méq/kg de polymère) et le nombre de motifs fonctionnels correspondants, on a utilisé une méthode de dosage selon la technique RMN ¹H, après estérification avec un excès de diazométhane, réactif connu pour réagir avec les fonctions COOH.

Plus précisément, cette méthode consiste à obtenir, à l'aide du diazométhane, des fonctions ester méthylique à partir des fonctions COOH qui ont été fixées sur l'élastomère, en vue d'accéder indirectement et de manière quantitative aux taux de fonctions COOH par RMN ¹H.
(i) On prépare au préalable le diazométhane de la façon suivante.
   On l'obtient par action de la potasse alcoolique sur le N-méthyl-N-nitroso-paratoluène sulfonamide, en présence de diéthyl éther et à la température de la glace fondante. On récupère ensuite la phase éthérée contenant le réactif par une simple distillation.
   On met ensuite en oeuvre la réaction d'estérification de la manière suivante.
(ii) On solubilise dans du toluène un échantillon de l'élastomère ayant été lavé et séché d'une manière spécifique, de sorte à pouvoir le caractériser analytiquement.
(iii) Cette préparation spécifique consiste à traiter l'élastomère par trois mises en solution successives dans du toluène, respectivement suivies de coagulations dans un mélange qui est constitué d'acétone et d'eau et qui est acidifié à pH=2 avec de l'acide chlorhydrique, cela afin d'éliminer toutes traces éventuelles de composés acides (stoppeur, anti-oxydant, résidus catalytiques, sous-produits tels que l'acide isovalérique, notamment). On sèche ensuite l'élastomère ainsi traité dans une étuve à 50° C, sous vide et sous atmosphère d'azote.
(iv) On y ajoute ensuite la solution éthérée contenant le diazométhane, de telle manière qu'il y ait un excès de réactif par rapport aux fonctions COOH. On fait par la suite coaguler dans du méthanol le polymère ainsi traité, puis on le remet par deux fois en solution dans le toluène et dans le méthanol pour sa coagulation. On sèche ensuite le polymère dans un dessicateur, à température ambiante et sous vide poussé, au moyen d'une pompe à palettes.
(v) On procède ensuite à une analyse RMN ¹H de la manière suivante.

On solubilise dans du sulfure de carbone un échantillon du polymère ainsi estérifié. On utilise pour l'analyse du signal RMN ¹H un spectromètre commercialisé sous la dénomination BRUKER AC200. Le signal caractéristique des trois protons méthyliques de COOCH₃ permet d'accéder quantitativement au taux initial de fonctions COOH du polymère fonctionnel.

Dans les exemples qui suivent, les propriétés des compositions de l'invention sont évaluées comme suit:
- viscosité Mooney ML (1+4) à 100° C, mesurée selon la norme ASTM D 1646, intitulée Mooney dans les tableaux,
- Modules d'allongement à 300 % (MA 300), à 100 % (MA 100) et à 10 % (MA 10): mesures effectuées selon la norme ASTM D 412,
- Indices de cassage Scott : mesurés à 20° C
   Force rupture (FR) mesurée en MPa,
   Allongement à la rupture (AR) en %,
- Pertes hystérétiques (PH): mesurées par rebond à 60° C en %. La déformation pour les pertes mesurées est de 40 %.
- Dureté SHORE A: mesures effectuées selon la norme ASTM D 2240,
- Propriétés dynamiques en cisaillement:
   Mesures en fonction de la déformation: effectuées à 10 Hertz avec une déformation crête-crête allant de 0,15 % à 50 %. La non-linéarité exprimée est la différence de module de cisaillement entre 0,15 % et 50 % de déformation en MPa. L'hystérèse est exprimée par la mesure de tan δ max. à 23° C selon la norme ASTM D 2231-71 (réapprouvée en 1977).

### I. Préparation de copolymères styrène/butadiène (SBR) fonctionnalisés ou non en extrémité de chaîne.

### A/ Préparation en discontinu d'un copolymère styrène/butadiène non fonctionnel (SBR A):

On prépare dans un premier temps un copolymère styrène/butadiène en injectant 167 g de styrène, 476 g de butadiène et 2000 ppm de tétrahydrofurane (THF) dans un réacteur de 10 litres contenant 6,4 litres d'heptane désaéré. Les impuretés sont neutralisées à l'aide de n-BuLi, puis on ajoute 0,0038 mol de n-BuLi ainsi que 0,0011 mol de tertiobutylate de sodium utilisé comme agent randomisant. La polymérisation est conduite à 55° C.

Dans un second temps, à 90 % de conversion, on injecte dans le réacteur 0,006 mol de méthanol. La solution de polymère est agitée pendant 15 minutes à 55° C. Le polymère est antioxydé par addition de 0,8 pce de 2,2'-méthylène bis(4-méthyl-6-tertiobutylphénol) et 0,2 pce de N-(1,3-diméthylbutyl)-N'-p-phénylènediamine, puis récupéré par stripping à la vapeur d'eau et séché sur outil à cylindres à 100° C.

Le SBR-A ainsi obtenu présente les caractéristiques suivantes:

| | |
|---|---|
| - Styrène incorporé | 26 % en poids |
| - Taux d'enchaînements vinyliques de la partie butadiénique | 41 % |
| - Viscosité mesurée dans le toluène à 25° C (dl/g) | 1,4 |
| - Viscosité Mooney ML (1+4, 100° C) | 26 |
| - Mn mesurée par osmométrie | 155 000 g/mol. |
| - indice de polydispersité | 1,07. |

### B/ Préparation en discontinu d'un copolymère styrène/butadiène (SBR B) fonctionnalisé par réaction avec l'hexaméthylcyclotrisiloxane:

On opère dans un premier temps dans des conditions identiques à celles décrites pour la préparation du SBR A.

Dans un deuxième temps, à 90 % de conversion, on prélève dans le réacteur une partie aliquote, on effectue un stoppage de la réaction par l'addition de méthanol et on mesure la viscosité du polymère qui est de 1,4 dl/g. On injecte dans le reste du contenu du réacteur 0,0013 mol d'hexaméthylcyclotrisiloxane (D3). La solution de polymère est agitée pendant 15 minutes à 55° C. Le polymère est antioxydé par addition de 0,8 pce de 2,2'-méthylène bis(4-méthyl-6-tertiobutylphénol) et 0,2 pce de N-(1,3-diméthylbutyl)-N'-p-phénylènediamine, puis récupéré par stripping à la vapeur d'eau et séché sur outil à cylindres à 100° C.

Le SBR B ainsi obtenu présente les caractéristiques suivantes:

| | |
|---|---|
| - Styrène incorporé | 26 % en poids |
| - Taux d'enchaînements vinyliques de la partie butadiénique | 41 % |
| - Viscosité mesurée dans le toluène à 25° C (dl/g) | 1,4 |
| - Viscosité Mooney ML (1+4, 100° C) | 26 |
| - Mn mesurée par osmométrie | 155 000 g/mol. |
| - Indice de polydispersité | 1,07. |

La mesure du taux de chaînes fonctionnalisées est effectuée par RMN ¹H, après purification de l'échantillon de polymère par une série de trois coagulations dans le méthanol, remise en solution dans le toluène. Ce taux de chaînes fonctionnalisées est exprimé au moyen de cette technique en milliéquivalents par kilogramme de polymère (méq/kg). Le spectre RMN ¹H est caractérisé par des massifs à 0 et -0,1 ppm correspondant au groupement -Si(CH₃)₂-OH. Pour le SBR B, l'analyse RMN ¹H fournit un taux de fonctions de 4,5 méq/kg ce qui, compte tenu de la masse moléculaire Mn du polymère, correspond à environ 70 % de chaînes fonctionnalisées.

### C/ Préparation en discontinu d'un copolymère styrène/butadiène (SBR C) comportant une fonction COOH à l'une de ses extrémités de chaîne par réaction avec du gaz carbonique:

On prépare dans un premier temps un copolymère styrène/butadiène en injectant 113 g de styrène, 323 g de butadiène et 500 ppm de tétrahydrofurane (THF) dans un réacteur de 10 litres contenant 6,4 litres d'heptane désaéré. Les impuretés sont neutralisées à l'aide de n-BuLi puis on ajoute 0,0026 mol de n-BuLi ainsi que 0,0008 mol de tertiobutylate de sodium utilisé comme agent randomisant. La polymérisation est conduite à 50° C.

Dans un deuxième temps, après conversion totale des monomères, on prélève dans le réacteur une partie aliquote, que l'on soumet à un « stoppage » par l'addition d'acide oxalique et on mesure la viscosité du polymère qui est de 1,4 dl/g. On refroidit le reste de la solution à -10° C puis on introduit le gaz carbonique à une pression de 3 bars, cela en plusieurs fois jusqu'à ce que la pression se stabilise. Le polymère est ensuite neutralisé par addition de 0,006 mol d'acide oxalique. Pendant la phase de neutralisation, on laisse le milieu réactionnel remonter en température. La solution de polymère est agitée pendant 15 minutes. Le polymère est antioxydé par addition de 0,8 pce de 2,2'-méthylène bis(4-méthyl-6-tertiobutylphénol) et 0,2 pce de N-(1,3-diméthylbutyl)-N'-p-phénylènediamine, puis récupéré par stripping à la vapeur d'eau et séché sur outil à cylindres à 100° C.

Le SBR C ainsi obtenu présente les caractéristiques suivantes:

| | |
|---|---|
| - Styrène incorporé | 27 % en poids |
| - Taux d'enchaînements vinyliques de la partie butadiénique | 39 % |
| - Viscosité mesurée dans le toluène à 25° C (dl/g) | 1,5 |
| - Viscosité Mooney ML (1+4, 100° C) | 28 |
| - Mn mesurée par osmométrie | 160 000 g/mol. |

On a cherché à caractériser par la technique SEC précitée la solution de polymère ayant réagi avec le gaz carbonique (appelé « SBR fonctionnel »), en comparaison avec un échantillon prélevé avant introduction du gaz carbonique et protoné par addition de méthanol (appelé « SBR Témoin »).

Comme le montre le graphe ci-après représentant les caractéristiques respectives dudit « SBR fonctionnel » et dudit « SBR témoin », la fonctionnalisation n'a pas modifié de façon significative la distribution des masses moléculaires:

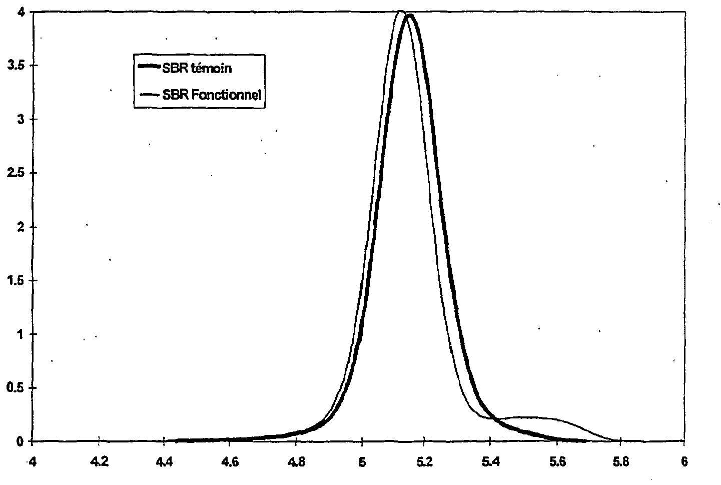

Le taux de fonctions COOH en extrémité de chaîne est mesuré par dosage selon la technique RMN ¹H décrite au paragraphe b) ci-dessus, et il est égal à 4,5 méq/kg ce qui, compte tenu de la masse moléculaire Mn de l'élastomère, correspond à un taux de fonctions COOH en extrêmité de chaîne qui est d'environ 80 %.

### D/ Préparation en discontinu de deux copolymères styrène/butadiène (SBR D et SBR E) comprenant chacun une fonction COOH à chaque extrémité de chaîne, par réaction avec du gaz carbonique:

Dans cet exemple, l'initiateur de polymérisation est le composé dilithié 1,2-dilithio-1,1,4,4-tétraphénylbutane (DLTB) dont le titre en liaisons carbone-lithium est déterminé par dosage Gilman (J. Am. Chem. Soc. 66, 1515, 1944).

### - Synthèse d'un copolymère SBR D de masse moléculaire Mn égale à 165 000 g/mol:

On prépare dans un premier temps un copolymère styrène/butadiène en injectant 113 g de styrène et 323 g de butadiène dans un réacteur de 10 litres contenant 1,1 litre de méthylcyclohexane et 4,5 litres de cyclohexane. Les impuretés sont neutralisées à l'aide de n-BuLi, puis on ajoute 46 ml d'une solution 0,113 M de DLTB (soit 0,0052 mol de liaisons C-Li) dans un mélange cyclohexane 70 / éther éthylique 30 (volume/volume), ainsi que 0,00078 mol de tertiobutylate de sodium utilisé comme agent randomisant. La polymérisation est conduite à 50° C.

Après conversion totale des monomères, on prélève dans le réacteur une partie aliquote, on effectue un stoppage de la réaction par l'addition de méthanol et on mesure la viscosité du polymère, qui est de 1,4 dl/g. Le reste de la solution est refroidi à -10° C, puis on additionne 2,8 litres de tétrahydrofurane préalablement distillé puis traité au n-butylithium, afin de neutraliser les impuretés résiduelles. On introduit ensuite le gaz carbonique à une pression de 3 bars et en plusieurs fois, jusqu'à ce que la pression se stabilise. Le polymère est ensuite neutralisé par addition de 0,012 mol d'acide oxalique. Pendant la phase de neutralisation, on laisse le milieu réactionnel remonter en température. La solution de polymère est agitée pendant 15 minutes. Le polymère est antioxydé par addition de 0,8 pce de 2,2'-méthylène bis(4-méthyl-6-trtiobutylphénol) et 0,2 pce de N-(1,3-diméthylbutyl)-N'-p-phénylènediamine, puis récupéré par stripping à la vapeur d'eau et séché sur outil à cylindres à 100° C.

Le SBR D ainsi obtenu présente les caractéristiques suivantes:
- Styrène incorporé 27% en poids
- Taux d'enchaînements vinyliques de la partie butadiénique 39%
- Viscosité mesurée dans le toluène à 25° C (dl/g) 1,42
- Viscosité Mooney ML (1+4, 100° C) 28
- Mn mesurée par osmométrie 165 000 g/mol

Comme précédemment, l'analyse SEC rapportée dans le graphique ci-après montre que la fonctionnalisation n'a pas induit de modification de la distribution des masses moléculaires:

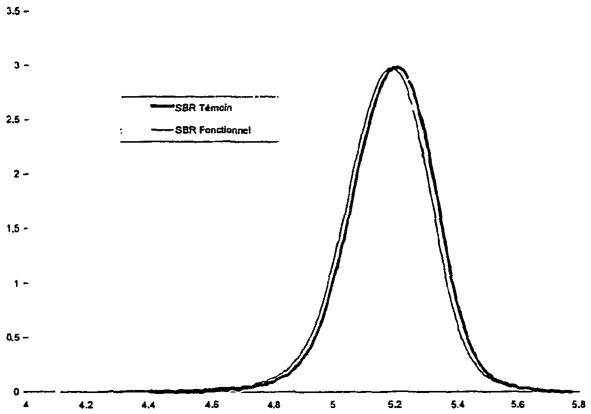

L'analyse RMN ¹H, réalisée comme indiqué précédemment, fournit un taux de fonctions de 6,1 méq/kg, ce qui, compte tenu de la masse moléculaire Mn du polymère, correspond à un taux de fonctions COOH aux extrémités de chaîne qui est d'environ 50 %.

### - Synthèse d'un copolymère SBR E de masse moléculaire Mn égale à 90 000 g/mol:

De la même façon, on a synthétisé le SBR E, qui présente une microstructure identique à celle du SBR D. L'analyse RMN ¹H fournit un taux de fonctions de 13 méq/kg ce qui, compte-tenu de la masse moléculaire Mn du polymère, correspond à un taux de fonctions COOH aux extrémités de chaîne qui est d'environ 60 %.

### II. Compositions de caoutchouc comprenant une charge inorganique renforçante et les élastomères précités:

### A/ Compositions dont la charge renforçante est constituée de silice:

### 1) Utilisation du SBR C (comportant une fonction COOH à une extrémité de chaîne):

Dans cet exemple, trois élastomères du paragraphe I (SBR A, SBR B, SBR C) ont été utilisés pour la préparation de quatre compositions de caoutchouc A, B, C et C' de type bande de roulement tourisme.

Plus précisément, les compositions A et B sont respectivement à base des élastomères SBR A et SBR B, alors que les compositions C et C' sont chacune à base de l'élastomère SBR C.

Chacune de ces compositions A, B, C et C' présente la formulation suivante (exprimée en pce: parties en poids pour cent parties d'élastomère):

| | |
|---|---|
| Elastomère | 100 |
| Silice (1) | 80 |
| Huile aromatique (« ENERFLEX 65 »). | 40 |
| Agent de liaison (2) | 6,4 |
| ZnO | 2,5 |
| Acide stéarique | 1,5 |
| Antioxydant (3) | 1,9 |
| Cire anti-ozone « C32ST » | 1,5 |
| Soufre | 1,1 |
| Sulfénamide (4) | 2 |
| Diphénylguanidine | 1,5 |

avec
(1) = Silice « ZEOSIL 1165 MP » de la société Rhodia,
(2) = Agent de liaison « Si69 » de la société Dégussa,
(3) =N-(1,3-dimétyl-butyl)-N'-phényl-p-phénylènediamine, et
(4) = N-cyclohexyl-2-benzothiazylsulfénamide.

Chacune des compositions A, B, C et C' est réalisée, dans un premier temps de travail thermo-mécanique, par deux étapes séparées par une phase de refroidissement, puis, dans un second temps de finition, par un travail mécanique.

On introduit successivement, dans un mélangeur interne de laboratoire de type "Banbury", dont la capacité est de 400 cm³, qui est rempli à 70 % et dont la température initiale est d'environ 90° C, l'élastomère, les deux tiers de la charge renforçante, l'agent de couplage, la diphénylguanidine et l'acide stéarique, puis, environ une minute plus tard, le reste de la charge renforçante, l'huile aromatique et la cire anti-ozone « C32ST » puis, seulement pour l'obtention de la composition C', la totalité du monoxyde de zinc à 120° C.

On conduit la première étape de travail thermo-mécanique pendant 4 à 5 minutes, jusqu'à une température maximale de tombée de 160° C environ. Le bloc élastomère est alors récupéré et refroidi.

Puis on conduit une seconde étape de travail thermo-mécanique dans le même mélangeur pendant une durée de 3 à 4 minutes, avec ajout de l'anti-oxydant et, pour les autres compositions A, B et C, avec ajout de la totalité du monoxyde de zinc, jusqu'à une température maximale de tombée de 160° C environ.

Le premier temps précité de travail thermo-mécanique est ainsi réalisé, étant précisé que la vitesse moyenne des palettes lors de ce premier temps est de 45 t/min.

On récupère le mélange ainsi obtenu, on le refroidit puis, dans un mélangeur externe (homo-finisseur), on ajoute le soufre et la sulfénamide à 30° C, en mélangeant encore le tout pendant une durée de 3 à 4 minutes (second temps précité de travail mécanique).

Les compositions ainsi obtenues sont ensuite calandrées, soit sous la forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150° C pendant 40 min.

Les résultats sont consignés dans le tableau 1 ci-après.

**TABLEAU 1**

| COMPOSITION | A | B | C | C' |
|---|---|---|---|---|
| Elastomère | SBR A | SBR B | SBR C | SBR C |
| Mn SBR | 155000 | 155000 | 160000 | 160000 |
| ML(1+4) gomme à 100° C | 26 | 26 | 28 | 28 |
| Propriétés à l'état non vulcanisé | | | | |
| ML(1+4) à 100° C (Mooney « mélange ») | 45 | 92 | 48 | 52 |
| Propriétés à l'état vulcanisé | | | | |
| Shore | 66,5 | 58,1 | 63,9 | 62,7 |
| MA10 | 5,53 | 3,52 | 5,24 | 4,87 |
| MA100 | 1,83 | 1,69 | 1,73 | 1,55 |
| MA300 | 2,09 | 2,31 | 2,10 | 1,92 |
| MA300/MA100 | 1,15 | 1,37 | 1,22 | 1,24 |
| indice de cassage Scott à 20° | C | | | |
| Fr | 18,9 | 23,4 | 19,8 | 23,0 |
| Ar% | 575 | 533 | 555 | 696 |
| Pertes à 60° C (déf. 40 %) | 29,5 | 16,7 | 26,4 | 26,9 |
| Propriétés dynamiques en fonction de la déformation | | | | |
| Delta G* à 23° C | 4,21 | 0,78 | 3,15 | 1,89 |
| tan δ max à 23° C | 0,335 | 0,186 | 0,287 | 0,244 |

Concernant les propriétés à l'état vulcanisé, on notera, d'une part, que le rapport MA300/MA100 relatif aux compositions B, C, C' (à base respectivement de SBR B et de SBR C) est supérieur à celui relatif à la composition A et, d'autre part, que les propriétés hystérétiques (à faibles et fortes déformations) sont fortement améliorées par rapport à celles présentées par la composition A.

On notera également que les compositions C et C' selon l'invention présentent des valeurs de Mooney « mélange » nettement inférieures à celle de la composition B. Ces valeurs sont voisines de celle de la composition A. Ces valeurs de Mooney témoignent d'une aptitude à la mise en oeuvre qui est nettement améliorée par rapport à celle des compositions à base d'élastomères fonctionnels connus.

De plus, la composition C', qui constitue un exemple préférentiel de réalisation de l'invention (avec incorporation de la totalité du monoxyde de zinc lors de la première étape du premier temps de travail thermo-mécanique), présente des propriétés hystérétiques à faibles déformations qui sont améliorées par rapport à celles de l'autre composition selon l'invention C.

En d'autres termes, l'élastomère SBR C, qui comprend une fonction COOH à l'une des extrémités de la chaîne, confère à des compositions chargées à la silice pratiquement les mêmes propriétés de caoutchouterie que celles conférées à une composition également chargée à la silice par un élastomère fonctionnalisé par réaction avec l'hexaméthylcyclotrisiloxane, mais avec une aptitude à la mise en oeuvre proche de celle conférée par un élastomère non fonctionnel tel que le SBR A.

### 2) Utilisation du SBR D et du SBR E (comportant chacun des fonctions COOH aux deux extrémités de la chaîne):

Dans cet exemple, quatre élastomères du paragraphe I (SBR A, SBR B, SBR D et SBR E) ont été utilisés pour la préparation de compositions de caoutchouc de type bande de roulement tourisme (A, B, D et E, respectivement).

Chacune de ces compositions présente la formulation suivante (exprimée en pce: parties en poids pour cent parties d'élastomère):

| | |
|---|---|
| Elastomère | 100 |
| Silice (1) | 80 |
| Huile aromatique (« ENERFLEX 65 ») | 40 |
| Agent de liaison (2) | 6,4 |
| ZnO | 2,5 |
| Acide stéarique | 1,5 |
| Antioxydant (3) | 1,9 |
| Cire anti-ozone « C32ST » | 1,5 |
| Soufre | 1,1 |
| Sulfénamide (4) | 2 |
| Diphénylguanidine | 1,5 |

avec
(1) = Silice « ZEOSIL 1165 MP » de la société Rhodia,
(2) = Agent de liaison « Si69 » de la société Dégussa,
(3) = N-(1,3-dimétyl-butyl)-N'-phényl-p-phénylènediamine, et
(4) = N-cyclohexyl-2-benzothiazylsulfénamide.

Chacune de ces compositions A, B, D et E est réalisée, dans un premier temps de travail thermo-mécanique, par deux étapes séparées par une phase de refroidissement, puis, dans un second temps de finition, par un travail mécanique.

On introduit successivement, dans un mélangeur interne de laboratoire de type "Banbury", dont la capacité est de 400 cm³, qui est rempli à 70 % et dont la température initiale est d'environ 90° C, l'élastomère, les deux tiers de la charge renforçante, l'agent de couplage; la diphénylguanidine et l'acide stéarique, puis, environ une minute plus tard, le reste de la charge renforçante, l'huile aromatique et la cire anti-ozone « C32ST ».

On conduit la première étape de travail thermo-mécanique pendant 4 à 5 minutes, jusqu'à une température maximale de tombée de 160° C environ. Le bloc élastomère est alors récupéré et refroidi.

Puis on conduit une seconde étape de travail thermo-mécanique dans le même mélangeur pendant une durée de 3 à 4 minutes, avec ajout de l'anti-oxydant et de la totalité du monoxyde de zinc, jusqu'à une température maximale de tombée de 160° C environ.

Le premier temps précité de travail thermo-mécanique est ainsi réalisé, étant précisé que la vitesse moyenne des palettes lors de ce premier temps est de 45 t/min.

On récupère le mélange ainsi obtenu, on le refroidit puis, dans un mélangeur externe (homo-finisseur), on ajoute le soufre et la sulfénamide à 30° C, en mélangeant encore le tout pendant une durée de 3 à 4 minutes (second temps précité de travail mécanique).

Les compositions ainsi obtenues sont ensuite calandrées comme indiqué au paragraphe 1) précédent, et elles sont utilisables par exemple comme produits semi-finis pour pneumatiques, en particulier pour des bandes de roulement.

La réticulation est effectuée à 150° C pendant 40 min.

Les résultats sont consignés dans le tableau 2 ci-après.

**TABLEAU 2**

| COMPOSITION | A | B | D | E |
|---|---|---|---|---|
| Elastomère | SBR A | SBR B | SBR D | SBR E |
| Mn SBR | 155000 | 155000 | 165000 | 90000 |
| ML(1+4) gomme à 100° C | 26 | 26 | 28 | non mesurable |
| Propriétés à l'état non vulcanisé | | | | |
| ML(1+4) à 100° C (Mooney « mélange ») | 45 | 92 | 69 | 20 |
| Propriétés à l'état vulcanisé | | | | |
| Shore | 66,5 | 58,1 | 59,4 | 63,0 |
| MA10 | 5,53 | 3,52 | 3,88 | 4,81 |
| MA100 | 1,83 | 1,69 | 1,71 | 1,74 |
| MA300 | 2,09 | 2,31 | 2,32 | 2,17 |
| MA300/MA100 | 1,15 | 1,37 | 1,36 | 1,25 |
| indice de cassage Scott à 20° C | | | | |
| Fr | 18,9 | 23,4 | 23,7 | 20,2 |
| Ar% | 575 | 533 | 570 | 553 |
| Pertes à 60° C (déf. 40 %) | 29,5 | 16,7 | 22,0 | 30,6 |
| Propriétés dynamiques en fonction de la déformation | | | | |
| Delta G* à 23° C | 4,21 | 0,78 | 0,88 | 0,89 |
| tan 8 max à 23° C | 0,335 | 0,186 | 0,190 | 0,175 |

Concernant les propriétés à l'état vulcanisé, on notera, d'une part, que le rapport MA300/MA100 relatif aux compositions B, D, E (à base respectivement de SBR B, de SBR D et de SBR E) est supérieur à celui relatif à la composition A et, d'autre part, que les propriétés hystérétiques (à faibles déformations) sont fortement améliorées par rapport à celles présentées par la composition A. Les propriétés hystérétiques aux fortes déformations sont par ailleurs améliorées pour les compositions B, D et E.

On notera également que les compositions D et E selon l'invention présentent des valeurs de Mooney « mélange » nettement inférieures à celle de la composition B. Ces valeurs de Mooney témoignent d'une aptitude à la mise en oeuvre qui est nettement améliorée par rapport à celle des compositions à base d'élastomères fonctionnels connus.

La composition E selon l'invention (qui est à base d'un élastomère de masse moléculaire Mn égale à 90 000 g/mol à fonctions terminales COOH), présente une aptitude à la mise en oeuvre très nettement améliorée, sans détérioration des propriétés hystérétiques aux faibles déformations (delta G* et tan δ max), par rapport à l'aptitude à la mise en oeuvre et aux propriétés hystérétiques des compositions B et D.

En d'autres termes, les élastomères SBR D et SBR E, qui comprennent tous deux une fonction COOH à chaque extrémité de chaîne, confèrent à des compositions chargées à la silice des propriétés de caoutchouterie proches de celles conférées par une composition également chargée à la silice par un élastomère fonctionnalisé par réaction avec l'hexaméthylcyclotrisiloxane, mais avec une aptitude à la mise en oeuvre nettement améliorée.

### B/ Compositions dont la charge renforçante est un noir de carbone modifié par de la silice:

Dans cet exemple, quatre des cinq élastomères du paragraphe I (SBR A, SBR B, SBR C et SBR D) ont été utilisés pour la préparation de compositions de caoutchouc de type bande de roulement tourisme (respectivement A', B', C" et D').

Chacune de ces compositions A', B', C" et D' présente la formulation suivante (exprimée en pce: parties en poids pour cent parties d'élastomère):

| | |
|---|---|
| Elastomère | 100 |
| Noir modifié silice (1) | 60 |
| Huile aromatique « ENERFLEX 65 » | 25 |
| Agent de liaison (2) | 1,8 |
| ZnO | 2,5 |
| Acide stéarique | 2,0 |
| Antioxydant (3) | 1,9 |
| Cire ozone « C32ST » | 1,5 |
| Soufre | 1,4 |
| Sulfénamide (4) | 1,7 |
| Diphénylguanidine | 0,42 |

avec
(1) = « CRX 2000 » de la société CABOT,
(2) = Agent de liaison « Si69 » de la société Dégussa,
(3) = N-(1,3-dimétyl-butyl)-N'-phényl-p-phénylènediamine, et
(4) = N-cyclohexyl-2-benzothiazylsulfénamide.

Chacune de ces compositions A', B', C" et D' est réalisée, dans un premier temps de travail thermo-mécanique, par deux étapes séparées par une phase de refroidissement, puis, dans un second temps de finition, par un travail mécanique.

On introduit successivement, dans un mélangeur interne de laboratoire de type "Banbury", dont la capacité est de 400 cm³, qui est rempli à 70 % et dont la température initiale est d'environ 90° C, l'élastomère, les deux tiers de la charge renforçante, l'agent de couplage, la diphénylguanidine et l'acide stéarique, puis, environ une minute plus tard, le reste de la charge renforçante, l'huile aromatique et la cire anti-ozone « C32ST ».

On conduit la première étape de travail thermo-mécanique pendant 4 à 5 minutes, jusqu'à une température maximale de tombée de 160° C environ. Le bloc élastomère est alors récupéré et refroidi.

Puis on conduit une seconde étape de travail thermo-mécanique dans le même mélangeur pendant une durée de 3 à 4 minutes, avec ajout de l'anti-oxydant et de la totalité du monoxyde de zinc, jusqu'à une température maximale de tombée de 160° C environ.

Le premier temps précité de travail thermo-mécanique est ainsi réalisé, étant précisé que la vitesse moyenne des palettes lors de ce premier temps est de 45 t/min.

On récupère le mélange ainsi obtenu, on le refroidit puis, dans un mélangeur externe (homo-finisseur), on ajoute le soufre et la sulfénamide à 30° C, en mélangeant encore le tout pendant une durée de 3 à 4 minutes (second temps précité de travail mécanique).

Les compositions ainsi obtenues sont ensuite calandrées comme indiqué précédemment, et elles sont utilisables par exemple comme produits semi-finis pour pneumatiques, en particulier pour des bandes de roulement.

La réticulation est effectuée à 150° C pendant 40 min.

Les résultats sont consignés dans le tableau 3 ci-après.

**TABLEAU 3**

| COMPOSITION | A' | B' | C" | D' |
|---|---|---|---|---|
| Elastomère | SBR A | SBR B | SBR C | SBR D |
| ML(1+4) gomme à 100° C_26 | | 26 | 29 | 28 |
| Propriétés à l'état non vulcanisé | | | | |
| ML(1+4) à 100° C (Mooney « mélange ») | 46 | 112 | 49 | 55 |
| Propriétés à l'état vulcanisé | | | | |
| Shore | 60,5 | 56,3 | 62,3 | 63,9 |
| MA10 | 4,49 | 3,37 | 4,75 | 5,03 |
| MA100 | 1,78 | 1,62 | 1,87 | 2,09 |
| MA300 | 2,48 | 2,72 | 2,58 | 2,90 |
| MA300/MA100 | 1,39 | 1,68 | 1,38 | 1,39 |
| indice de cassage Scott à 20° C | | | | |
| Fr | 18,7 | 20,3 | 20,5 | 20,9 |
| Ar % | 435 | 410 | 480 | 425 |
| Pertes à 60° C (déf. 35 %) | 27,2 | 17,5 | 29,4 | 26,1 |
| Propriétés dynamiques en fonction de la déformation | | | | |
| Delta G* à 23° C | 2,82 | 0,68 | 2,23 | 1,76 |
| tan δ max à 23° C | 0,307 | 0,198 | 0,282 | 0,245 |

Concernant les propriétés à l'état vulcanisé, on notera que les propriétés hystérétiques aux faibles déformations des compositions selon l'invention C" et surtout D' (toutes deux à base des élastomères SBR C et SBR D à fonction(s) COOH, respectivement) sont améliorées par rapport à celles présentées par la composition de référence A' (à base de l'élastomère SBR A non fonctionnel).

On notera également que les compositions C" et D' selon l'invention présentent des valeurs de Mooney « mélange » nettement inférieures à celle de la composition B' (à base de l'élastomère SBR B fonctionnalisé par l'hexaméthylcyclotrisiloxane). Ces valeurs sont très voisines de celle de la composition A'. Ces valeurs de Mooney témoignent d'une aptitude à la mise en oeuvre qui est nettement améliorée par rapport à celle des compositions à base d'élastomères fonctionnels connus.

En d'autres termes, l'élastomère SBR D, qui comprend une fonction COOH à chaque extrémité de chaîne, confère à une composition chargée par un noir de carbone modifié par de la silice des propriétés de caoutchouterie à l'état vulcanisé qui sont proches de celles conférées à une composition chargée de la même manière par un élastomère fonctionnalisé par l'hexaméthylcyclotrisiloxane, et en outre avec une aptitude à la mise en oeuvre proche de celle conférée par un élastomère non fonctionnel tel que le SBR A.

## Revendications

1. Composition de caoutchouc réticulable ou réticulée qui est utilisable pour constituer une bande de roulement de pneumatique, ladite composition étant à base :
- d'une matrice élastomère comprenant au moins un élastomère diénique qui comporte une fonction acide carboxylique à l'une ou à chacune de ses deux extrémités de chaîne, et
- d'une charge renforçante comprenant une charge inorganique renforçante,
- un système de réticulation,
- un antioxydant,
**caractérisée en ce que** ledit élastomère diénique présente une masse moléculaire en nombre Mn qui est supérieure à 80 000 g/mol et **en ce qu'**il est présent en quantité majoritaire dans ladite matrice élastomère.

2. Composition de caoutchouc réticulable ou réticulée selon la revendication 1, **caractérisée en ce que** ledit élastomère diénique est un copolymère butadiène/ styrène ou un copolymère butadiène/ styrène/ isoprène.

3. Composition de caoutchouc réticulable ou réticulée selon la revendication 1 ou 2, **caractérisée en ce que** ladite charge inorganique renforçante est présente dans ladite composition de caoutchouc selon une quantité égale ou supérieure à 40 pce (pce: parties en poids pour cent parties d'élastomère(s) diénique(s)).

4. Composition de caoutchouc réticulable ou réticulée selon une des revendications précédentes, **caractérisée en ce que** ladite charge inorganique renforçante est présente à titre majoritaire dans ladite charge renforçante, de telle manière que la fraction massique de ladite charge inorganique renforçante dans ladite charge renforçante soit supérieure à 50 %.

5. Composition de caoutchouc réticulable ou réticulée selon une des revendications précédentes, **caractérisée en ce que** ladite charge inorganique renforçante comprend de la silice.

6. Composition de caoutchouc réticulable ou réticulée selon une des revendications 1 à 4, **caractérisée en ce que** ladite charge inorganique renforçante comprend du noir de carbone modifié en surface par de la silice.

7. Composition de caoutchouc réticulable ou réticulée selon une des revendications précédentes, **caractérisée en ce qu'**elle comprend un agent de liaison charge inorganique renforçante/ élastomère diénique.

8. Procédé de préparation d'une composition de caoutchouc réticulable selon une des revendications précédentes, ledit procédé consistant essentiellement en un premier temps de travail thermo-mécanique des constituants de ladite composition à l'exception du système de réticulation et à une température maximale comprise entre 130° C et 200° C, suivi d'un second temps de travail mécanique mis en oeuvre à une température inférieure à celle dudit premier temps et au cours de laquelle est incorporé ledit système de réticulation, ledit premier temps comprenant:
- une première étape dans laquelle sont mélangés entre eux lesdits constituants dudit premier temps, à l'exception de l'agent anti-oxydant et
- une seconde étape dans laquelle l'agent anti-oxydant est incorporé et mélangé aux constituants de ladite première étape,
du monoxyde de zinc étant ajouté lors dudit premier temps pour activer la réticulation ultérieure,
**caractérisé en ce qu'**il consiste à incorporer la totalité dudit monoxyde de zinc lors de ladite première étape dudit premier temps de travail thermo-mécanique.

9. Bande de roulement de pneumatique, **caractérisée en ce qu'**elle comprend une composition de caoutchouc selon une des revendications 1 à 7.

10. Bande de roulement de pneumatique selon la revendication 9, **caractérisée en ce qu'**elle est constituée de ladite composition de caoutchouc.

11. Pneumatique présentant une résistance au roulement réduite, **caractérisée en ce qu'**il comporte une bande de roulement selon la revendication 9 ou 10.

## Claims

1. A cross-linkable or cross-linked rubber composition which is usable for constituting a tyre tread, said composition being based on:
- an elastomeric matrix comprising at least one diene elastomer which comprises a carboxylic acid function at one or at each of its two chain ends, and
- a reinforcing filler comprising a reinforcing inorganic filler,
- a cross-linking system,
- an antioxidant,
**characterised in that** said diene elastomer has a number-average molecular weight which is greater than 80,000 g/mol, and **in that** it is present in a majority quantity in said elastomeric matrix.

2. A cross-linkable or cross-linked rubber composition according to Claim 1, **characterised in that** said diene elastomer is a butadiene/styrene copolymer or a butadiene/styrene/isoprene copolymer.

3. A cross-linkable or cross-linked rubber composition according to Claim 1 or 2, **characterised in that** said reinforcing inorganic filler is present in said rubber composition in a quantity equal to or greater than 40 phr (phr: parts by weight per hundred parts of diene elastomer(s)).

4. A cross-linkable or cross-linked rubber composition according to one of the preceding claims, **characterised in that** said reinforcing inorganic filler is present in a majority proportion in said reinforcing filler, such that the mass fraction of said reinforcing inorganic filler in said reinforcing filler is greater than 50%.

5. A cross-linkable or cross-linked rubber composition according to one of the preceding claims, **characterised in that** said reinforcing inorganic filler comprises silica.

6. A cross-linkable or cross-linked rubber composition according to one of Claims 1 to 4, **characterised in that** said reinforcing inorganic filler comprises carbon black surface-modified by silica.

7. A cross-linkable or cross-linked rubber composition according to one of the preceding claims, **characterised in that** it comprises a reinforcing inorganic filler/diene elastomer bonding agent.

8. A process for the preparation of a cross-linkable rubber composition according to one of the preceding claims, said process consisting essentially in a first phase of thermomechanical working of the constituents of said composition with the exception of the cross-linking system at a maximum temperature of between 130°C and 200°C, followed by a second phase of mechanical working effected at a temperature less than that of said first phase and during which said cross-linking system is incorporated, said first phase comprising:
- a first step in which said constituents of said first phase, with the exception of the antioxidant, are mixed together, and
- a second step in which the antioxidant is incorporated and mixed with the constituents of said first step,
zinc monoxide being added during said first phase to activate the later cross-linking, **characterised in that** it consists of incorporating all said zinc monoxide during said first step of said first phase of thermomechanical working.

9. A tread for a tyre, **characterised in that** it comprises a rubber composition in accordance with one of Claims 1 to 7.

10. A tyre tread according to Claim 9, **characterised in that** it is formed of said rubber composition.

11. A tyre having reduced rolling resistance, **characterised in that** it comprises a tread according to Claim 9 or 10.

## Patentansprüche

1. Vernetzbare oder vernetzte Kautschukzusammensetzung, die zur Bildung einer Reifenlauffläche verwendet werden kann, wobei die Zusammensetzung auf
- einer Elastomermatrix, die mindestens ein Dienelastomer mit einer Carbonsäurefunktion an einem oder jedem seiner beiden Kettenenden umfasst, und
- einem verstärkenden Füllstoff, der einen verstärkenden anorganischen Füllstoff umfasst,
- einem Vernetzungssystem,
- einem Antioxidans
basiert, **dadurch gekennzeichnet, dass** das Dienelastomer eine zahlenmittlere Molmasse Mn von mehr als 80.000 g/mol aufweist und in der Elastomermatrix in überwiegender Menge vorliegt.

2. Vernetzbare oder vernetzte Kautschukzusammensetzung nach Anspruch 1, **dadurch gekennzeichnet, dass** es sich bei dem Dienelastomer um ein Butadien-Styrol-Copolymer oder ein Butadien-Styrol-Isopren-Copolymer handelt.

3. Vernetzbare oder vernetzte Kautschukzusammensetzung nach Anspruch 1 oder 2, **dadurch gekennzeichnet, dass** der verstärkende anorganische Füllstoff in der Kautschukzusammensetzung in einer Menge größer gleich 40 phr (phr: Gewichtsteile pro hundert Teile Dienelastomer(e)) vorliegt.

4. Vernetzbare oder vernetzte Kautschukzusammensetzung nach einem der vorhergehenden Ansprüche, **dadurch gekennzeichnet, dass** der verstärkende anorganische Füllstoff in dem verstärkenden Füllstoff in überwiegender Menge vorliegt, so dass der Massenanteil des verstärkenden anorganischen Füllstoffs in dem verstärkenden Füllstoff über 50% liegt.

5. Vernetzbare oder vernetzte Kautschukzusammensetzung nach einem der vorhergehenden Ansprüche, **dadurch gekennzeichnet, dass** der verstärkende anorganische Füllstoff Kieselsäure umfasst.

6. Vernetzbare oder vernetzte Kautschukzusammensetzung nach einem der Ansprüche 1 bis 4, **dadurch gekennzeichnet, dass** der verstärkende anorganische Füllstoff durch Kieselsäure oberflächenmodifizierten Ruß umfasst.

7. Vernetzbare oder vernetzte Kautschukzusammensetzung nach einem der vorhergehenden Ansprüche, **dadurch gekennzeichnet, dass** sie ein Verbindungsmittel für den verstärkenden anorganischen Füllstoff und das Dienelastomer umfasst.

8. Verfahren zur Herstellung einer vernetzbaren Kautschukzusammensetzung nach einem der vorhergehenden Ansprüche, bei dem man im Wesentlichen in einem ersten Schritt die Bestandteile der Zusammensetzung mit Ausnahme des Vernetzungssystems bei einer Höchsttemperatur zwischen 130°C und 200°C thermomechanisch bearbeitet und dann in einem zweiten Schritt bei einer Temperatur, die unter derjenigen des ersten Schritts liegt, mechanisch bearbeitet und dabei das Vernetzungssystem einarbeitet, wobei der erste Schritt Folgendes umfasst:
- eine erste Stufe, in der die Bestandteile aus dem ersten Schritt mit Ausnahme des Antioxidans miteinander gemischt werden, und
- eine zweite Stufe, in der das Antioxidans eingearbeitet und mit den Bestandteilen aus dem ersten Schritt gemischt wird,
wobei nährend des ersten Schritts Zinkmonoxid zur Aktivierung der späteren Vernetzung zugesetzt wird,
**dadurch gekennzeichnet, dass** man das gesamte Zinkmonoxid während der ersten Stufe des ersten Schritts der thermomechanischen Bearbeitung einarbeitet.

9. Reifenlauffläche, **dadurch gekennzeichnet, dass** sie eine Kautschukzusammensetzung gemäß einem der Ansprüche 1 bis 7 umfasst.

10. Reifenlauffläche nach Anspruch 9, **dadurch gekennzeichnet, dass** sie aus der Kautschukzusammensetzung besteht.

11. Reifen mit verringertem Rollwiderstand, **dadurch gekennzeichnet, dass** er eine Lauffläche gemäß Anspruch 9 oder 10 aufweist.
